# DEMANDE DE BREVET EUROPEEN

(11) **EP 1 580 478 A1**
(43) Date de publication de la demande: **28.09.2005**
(21) Numéro de dépôt: 05290563.5
(22) Date de dépôt: 15.03.2005
(51) Int. Cl.: F16L 37/098

(54) **Raccord verrouillable/déverrouillable de tuyauterie**

(30) Priorité: 22.03.2004 FR 0402926
(71) Demandeur: Gripp, 38180 Seyssins (FR)
(72) Inventeur: Menet, Georges, 73800 Les Marches (FR)
(74) Mandataire: Casalonga, Axel

(57) **Abrégé**

Raccord de tuyauterie comprenant un embout femelle (2) et un embout mâle (29) comprenant une première partie d'extrémité (33) adaptée pour la fixation de l'extrémité d'un tuyau (35) et une seconde partie d'extrémité (31) adaptée pour être engagée dans l'embout femelle (2) et présentant une rainure annulaire extérieure de retenue (32).

L'embout femelle est muni intérieurement d'une rondelle de retenue (15) au travers de laquelle s'engage l'embout mâle et comprenant une partie périphérique (16) reliée cet embout femelle et des dents intérieures (17) élastiquement déformables, inclinées vers le centre dans le sens dudit engagement et dont les extrémités s'engagent dans ladite rainure annulaire de retenue lorsque l'embout mâle et l'embout femelle sont amenés l'un dans l'autre dans une position montée.

L"embout femelle est muni d'une bague de déverrouillage coulissante (19) au travers de laquelle s'engage l'embout mâle et qui, lorsqu'elle est sollicitée dans ledit sens d'engagement, agit sur les dents de la rondelle de retenue pour provoquer leur extraction de la rainure périphérique de retenue de l'embout mâle.

## Description

La présente invention concerne le domaine des installations sanitaires ou de chauffage et plus particulièrement le domaine des raccords servant à relier des tuyaux à des embouts notamment de nourrices.

On connaît actuellement un raccord qui comprend un embout femelle qui est muni intérieurement, entre un épaulement et un écrou de fixation, un empilage constitué d'un joint d'étanchéité et d'une rondelle de retenue métallique qui présente des dents intérieures inclinées élastiques. Après avoir introduit librement la partie d'extrémité d'un tuyau métallique dans cet empilage, on serre l'écrou de fixation qui, grâce à une forme tronconique appropriée de la partie périphérique de la rondelle de retenue, déforme cette dernière de telle sorte que ses dents entrent en prise avec la paroi du tuyau et empêche l'extraction de ce tuyau. Un tel raccord présente des inconvénients. La position du tuyau dans l'embout femelle est indéfinie. Pour des tuyaux de diamètres différents, il faut prévoir des embouts femelles, des rondelles de retenue, des joints, des écrous de fixation différents.

On connaît également un raccord qui comprend un embout femelle qui est muni intérieurement d'un joint d'étanchéité et, entre un épaulement et une bague de fixation vissée ou sertie, un empilage constitué de deux rondelles d'appui prenant entre elles une rondelle de retenue métallique qui présente des dents intérieures inclinées élastiques. Lorsqu'on introduit la partie d'extrémité d'un tuyau métallique dans cet empilage, les dents de la rondelle de retenue glissent sur la paroi lisse du tuyau, l'angle d'inclinaison des dents étant tel que si l'on tire le tuyau dans le sens de son extraction, ces dents entrent en prise avec la paroi du tuyau, empêchant l'extraction de ce dernier. La position du tuyau dans l'embout femelle est indéfinie. La rondelle d'appui située du côté de l'écrou de fixation est munie intérieurement d'une bague coulissante qui sert à écarter les dents lorsqu'elle est enfoncée, de façon à permettre l'extraction du tuyau. Un tel raccord présente des inconvénients. La position du tuyau dans l'embout femelle est indéfinie. Les dents de la rondelle de retenue doivent être maintenues écartées par la bague coulissante sur toute la course de l'extraction. Pour des tuyaux de diamètres différents, il faut prévoir des embouts femelles, des rondelles de retenue, des rondelles d'appui, des joints, des bagues de fixation et des bagues coulissantes différents.

La présente invention a pour but de proposer un raccord plus simple d'emploi et plus polyvalent.

Le raccord de tuyauterie selon l'invention comprend un embout femelle et un embout mâle comprenant une première partie d'extrémité adaptée pour la fixation de l'extrémité d'un tuyau et une seconde partie d'extrémité adaptée pour être engagée dans l'embout femelle et présentant une rainure périphérique de retenue,

Selon l'invention, l'embout femelle est muni intérieurement d'une rondelle de retenue au travers de laquelle s'engage l'embout mâle et comprenant une partie périphérique reliée cet embout femelle et des dents intérieures élastiquement déformables, inclinées vers le centre dans le sens dudit engagement et dont les extrémités s'engagent dans ladite rainure annulaire de retenue lorsque l'embout mâle et l'embout femelle sont amenés l'un dans l'autre dans une position montée.

Selon l'invention, l'embout femelle est muni d'une bague de déverrouillage coulissante au travers de laquelle s'engage l'embout mâle et qui, lorsqu'elle est sollicitée dans ledit sens d'engagement, agit sur les dents de la rondelle de retenue pour provoquer leur extraction de la rainure périphérique de retenue de l'embout mâle.

Selon l'invention, l'embout femelle est de préférence muni intérieurement d'un joint d'étanchéité qui vient en appui contre une face périphérique de l'embout mâle située entre ladite rainure périphérique de retenue et l'extrémité de l'embout mâle.

Selon l'invention, l'embout mâle présente de préférence un épaulement annulaire périphérique situé à distance de la bague de déverrouillage lorsque l'embout mâle et l'embout femelle sont en position montée, de telle sorte que l'engagement d'un outil de démontage dans l'espace séparant la bague de déverrouillage et l'épaulement annulaire de l'embout mâle assure l'extraction précitée des dents de la rondelle de retenue.

Selon l'invention, ledit outil comprend de préférence deux bras s'engageant de part et d'autre de l'embout mâle, ces bras présentant des rampes de façon à faire coulisser l'embout mâle et la bague de déverrouillage l'une par rapport à l'autre.

Selon l'invention, l'angle au sommet des dents inclinées de ladite rondelle de retenue est de préférence tel qu'elles peuvent glisser en appui contre la paroi extérieure de la seconde partie de l'embout mâle.

Selon l'invention, l'embout femelle est de préférence muni intérieurement d'un anneau de maintien et la partie périphérique de la rondelle de retenue est prise entre un épaulement intérieur d'appui ménagé dans l'embout femelle et cet anneau de maintien.

Selon l'invention, la rondelle de retenue s'engage de préférence librement dans l'embout femelle jusqu'à l'épaulement intérieur d'appui de ce dernier.

Selon l'invention, l'embout femelle présente de préférence un épaulement annulaire intérieur constituant une butée pour l'extrémité de la seconde partie de l'embout mâle lorsque ce dernier est en position montée.

Selon l'invention, l'embout femelle et la bague de déverrouillage présentent, de préférence, respectivement un épaulement annulaire et une rainure annulaire engagés l'un dans l'autre.

Selon l'invention, la bague de déverrouillage présente des fentes longitudinales de montage.

Selon l'invention, l'embout mâle présente de préférence une rainure annulaire extérieure, qui, en position montée, est localisée dans la zone de la partie arrière de la bague de déverrouillage.

La présente invention sera mieux comprise à l'étude d'un raccord de tuyauterie décrit à titre d'exemple non limitatif et illustré par le dessin sur lequel :
- la figure 1 représente en coupe longitudinale un embout femelle d'un raccord selon l'invention, avant montage ;
- la figure 2 représente en coupe longitudinale l'embout femelle de la figure 1 auquel est accouplé en position montée un embout mâle d'un raccord selon l'invention ;
- la figure 3 représente en coupe longitudinale le raccord de la figure 2, dans une position correspondant à une première phase de démontage ;
- la figure 4 représente en coupe longitudinale le raccord de la figure 2, dans une position correspondant à une seconde phase de démontage ;
- la figure 5 représente une vue latérale du raccord précité, dans une position correspondant à une seconde phase de démontage ;
- et la figure 6 représente une vue en perspective d'un outil de démontage du raccord précité.

Le raccord 1 représenté comprend un embout femelle cylindrique 2 qui, dans l'exemple, constitue par une sortie latérale d'une nourrice métallique 3.

Cet embout femelle 2 présente intérieurement dans son canal, entre un endroit situé en profondeur et son extrémité, un épaulement annulaire 4, une paroi cylindrique 5 dans laquelle est ménagée une rainure annulaire 6 formée à distance des extrémités de cette paroi 5, un épaulement annulaire 7, une paroi cylindrique 8, un épaulement annulaire d'appui 9, une paroi cylindrique 10 dans laquelle sont ménagées une rainure annulaire 11 prolongeant l'épaulement 9 et une rainure annulaire 12 formée à distance de cette rainure 12 et un chanfrein terminal d'entrée 12.

Dans la rainure 6 est introduit un joint d'étanchéité annulaire 14.

Une rondelle de retenue métallique 15, présentant une partie annulaire 16 et des dents intérieures 17 élastiquement déformables, est introduite librement au travers de la paroi cylindrique 10 jusqu'à ce que sa partie annulaire 16 vienne en appui sur l'épaulement 9, ses dents 17 s'étendant au travers de l'espace ménagé par l'épaulement 7 et la paroi cylindrique 8 et étant inclinées vers le centre ou l'intérieur dans le sens d'un engagement dans l'embout femelle 2, c'est-à-dire formant un cône ouvert du côté de l'extrémité de l'embout femelle 2.

Un anneau métallique élastique coupé 18 est introduit dans la rainure 11 et dépasse de la paroi 10 de telle sorte que la rondelle de retenue 15 est maintenue avec un jeu axial.

Une bague de déverrouillage 19, de préférence en matière plastique, comprend intérieurement une paroi cylindrique 20 dont le diamètre est légèrement supérieur au diamètre de la paroi cylindrique 5 de l'embout femelle 2 et extérieurement, entre une extrémité avant et une extrémité arrière, une paroi cylindrique avant 21 dont le diamètre est légèrement inférieur au diamètre intérieur de l'anneau de maintien 18, un épaulement intermédiaire 22 dont le diamètre est légèrement inférieur au diamètre intérieur de la rainure 12, une paroi cylindrique 23 dont le diamètre est légèrement inférieur au diamètre de la paroi cylindrique 10 et un épaulement arrière d'extrémité 24.

L'extrémité de la partie avant 23 de cette bague 19, opposée à l'épaulement arrière 24 et s'étendant en avant de l'épaulement intermédiaire 22, présente un chanfrein intérieur 25 et un chanfrein extérieur 26 de telle sorte que cette extrémité est appointée.

L'épaulement intermédiaire 22 présente, sur son bord opposé à l'épaulement arrière 24, un chanfrein 27.

La bague de déverrouillage 19 présente en outre des fentes longitudinales 28 de montage qui s'étendent depuis son extrémité avant jusqu'à un endroit situé au-delà de l'épaulement intermédiaire 22.

La bague de déverrouillage 19 est engagée dans la partie avant du canal de l'embout femelle 2 de telle sorte que son épaulement intermédiaire 21 soit disposé dans la rainure annulaire 12, que sa partie avant 21 traverse l'anneau de maintien 18 et que son épaulement arrière 24 soit à distance de l'extrémité de l'embout femelle 2. Cette mise en place est rendue possible par le fait que les fentes longitudinales 28 permettent une déformation élastique de la bague 19 vers l'intérieur, permettant à l'épaulement intermédiaire 22 de franchir la partie de la paroi cylindrique 10 située en avant de la rainure 12.

Ainsi, la bague de déverrouillage 19 est montée coulissante axialement et son extrémité avant est susceptible de venir en contact avec les dents 17 de la rondelle de retenue 15 ;

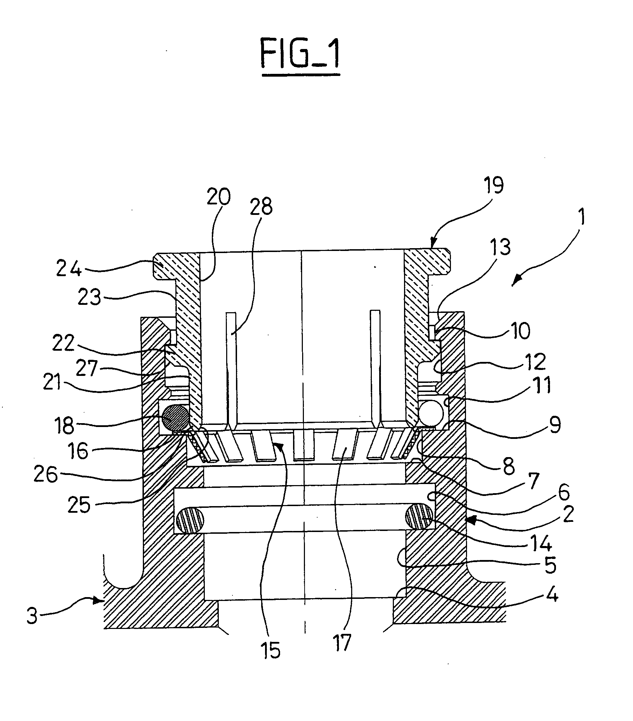

Dans la position d'attente représentée sur la figure 1, les extrémités des dents 17 de la rondelle de retenue 15 dépassent vers l'intérieur par rapport à la paroi cylindrique 5 de l'embout femelle 2. Il en est de même du joint d'étanchéité 14.

Le raccord 1 comprend également un embout mâle 29 qui présente, de part et d'autre d'un épaulement annulaire extérieur périphérique 30, une partie cylindrique d'extrémité avant 31 qui présente un chanfrein extérieur 31 a à son extrémité et une partie cylindrique d'extrémité arrière 33.

Le diamètre extérieur de la partie cylindrique avant 31 est légèrement inférieur au diamètre de la paroi cylindrique 5 de l'embout femelle 2, une rainure annulaire extérieure de retenue 32 étant ménagée dans cette partie 31.

La partie arrière 33 de l'embout mâle 29, qui présente des crans annulaires 34, est introduite dans la partie d'extrémité d'un tuyau 35, cette partie étant emprisonnée dans une bague 36 sertie.

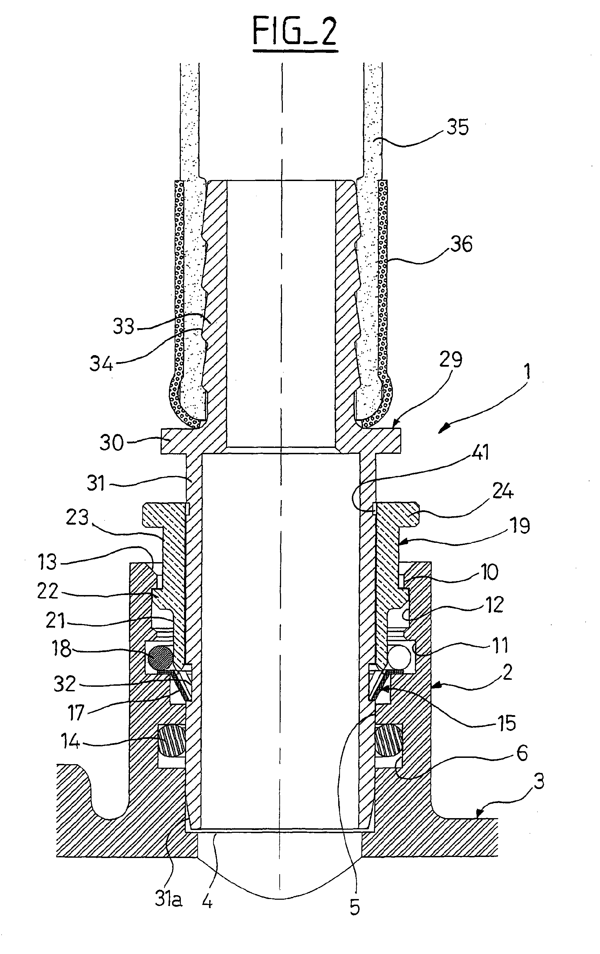

Comme le montre la figure 2, l'embout femelle 2 et l'embout mâle 29 peuvent être accouplés de la manière suivante.

On engage axialement la partie avant 31 de l'embout mâle 29 dans l'embout femelle 2 jusqu'à ce que l'extrémité avant de l'embout mâle 29 vienne en butée contre l'épaulement 4 de l'embout femelle 2. Ce faisant, la partie avant 31 de l'embout mâle 29 traverse la bague de déverrouillage 19, déforme élastiquement vers l'extérieur les dents 17 de la rondelle de retenue 15 en les repoussant et en augmentant l'angle au sommet du cône qu'elles forment, glisse sur les extrémités de ces dents 17, puis glisse dans la paroi cylindrique 5 de l'embout femelle 2 dans laquelle il est guidé, en glissant au travers et en coinçant le joint d'étanchéité 14 dans la rainure annulaire 6 de l'embout femelle 2.

La rainure annulaire 32 de la partie avant 31 de l'embout mâle 29 est placée de telle sorte que les extrémités des dents 17 de la rondelle de retenue 15 s'introduisent élastiquement dans cette rainure annulaire 32 juste avant que l'embout mâle 29 atteigne sa position finale en butée contre l'épaulement 4 de l'embout femelle 2, en augmentant l'angle au sommet du cône que les dents 17 forment.

Ainsi, l'embout mâle 29 se trouve verrouillé dans l'embout femelle 2. En effet, si l'on tire sur l'embout mâle 29 dans le sens de son extraction, les efforts engendrés sont repris par la rondelle de retenue 15 dont les dents 17 sont en prise dans la rainure annulaire 32 de l'embout mâle 29 puis par l'anneau de maintien 18 qui lui-même est en prise dans la rainure annulaire 11 de l'embout femelle 2.

Par ailleurs, la partie avant 31 de l'embout mâle 29 présente une rainure annulaire extérieure 41 de faible largeur, qui, en position montée, est localisée dans la zone de la partie arrière de la bague de déverrouillage 19. Ainsi, on peut contrôler de visu que l'embout mâle 29 est correctement engagé dans l'embout femelle 2.

Si maintenant on sollicite la bague de déverrouillage 19 de façon à la faire glisser dans le sens de son engagement dans l'embout femelle, son extrémité chanfreinée vient en appui sur les dents 17 de la rondelle de retenue 15 et provoque la déformation de ces dernières en réduisant l'angle au sommet du cône qu'elles forment, jusqu'à ce que leurs extrémités se dégagent de la rainure annulaire 32 de l'embout mâle 29.

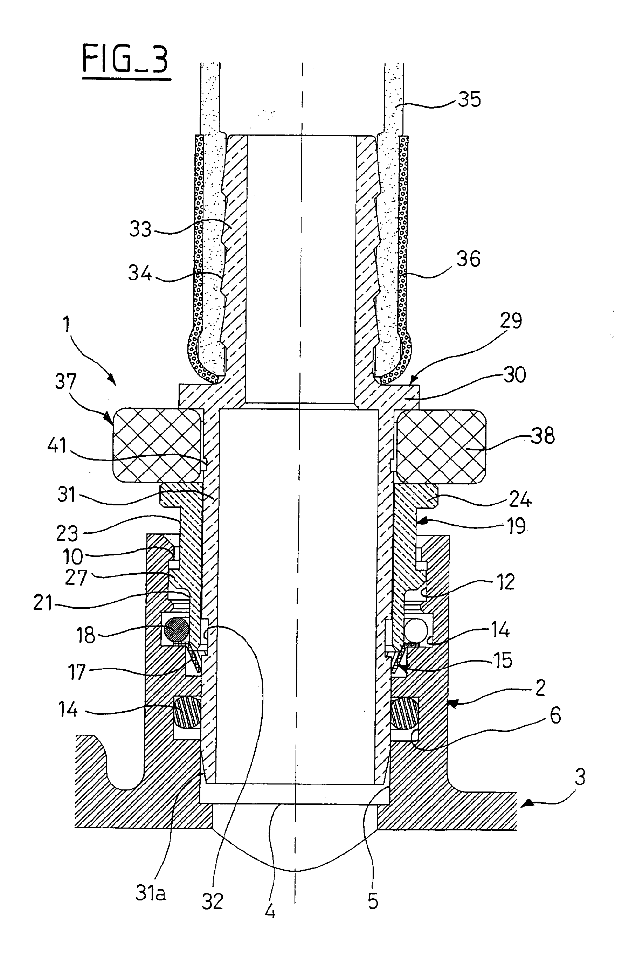

Puis, comme le montre la figure 3, on fait glisser l'embout mâle dans le sens de son extraction et on peut relâcher la bague de déverrouillage 19 dès que les extrémités des dents 17 de la rondelle de retenue 15 sont en vis-à-vis de la paroi extérieure de la partie avant 31 de l'embout mâle 29.

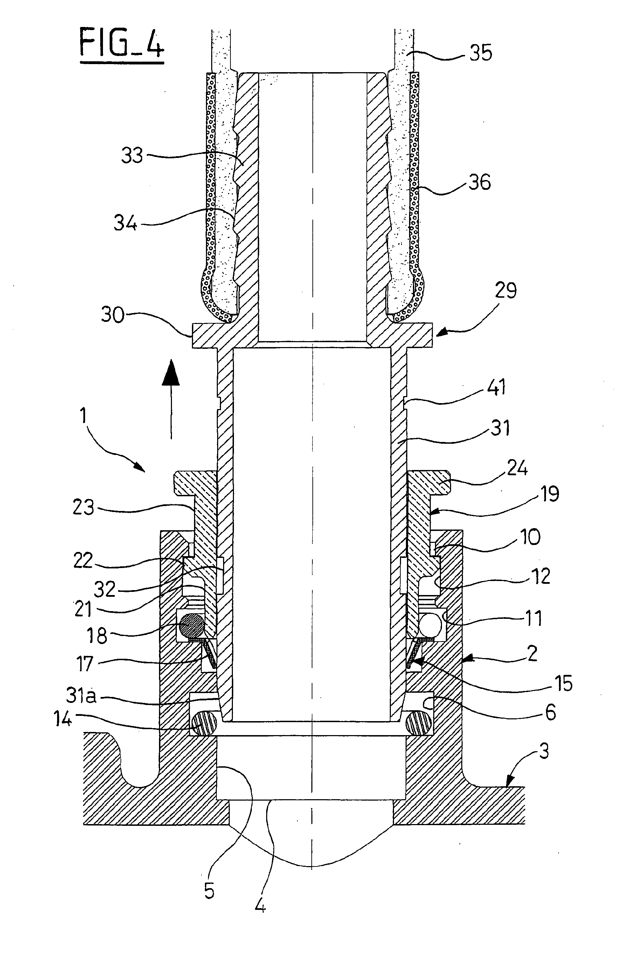

L'angle au sommet du cône que les dents 17 de la rondelle de retenue 15 forment étant tel qu'elle peuvent glisser sur la paroi extérieure de la partie avant 31 de l'embout mâle 29, on peut alors, comme le montre la figure 4, tirer sur l'embout mâle 29 de façon à l'extraire complètement.

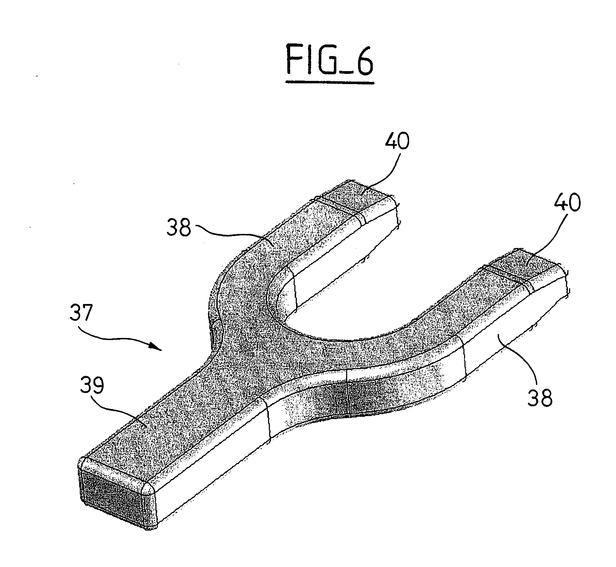

Afin de faciliter les opérations de déverrouillage décrites ci-dessus, on peut avantageusement utiliser un outil de démontage 37 montré en entier sur la figure 6.

Cet outil 37 est en forme de Y et comprend deux branches parallèles 38 et un manche 39. Les parties d'extrémité des branches 38 présentent des pans inclinés constituant des rampes 40.

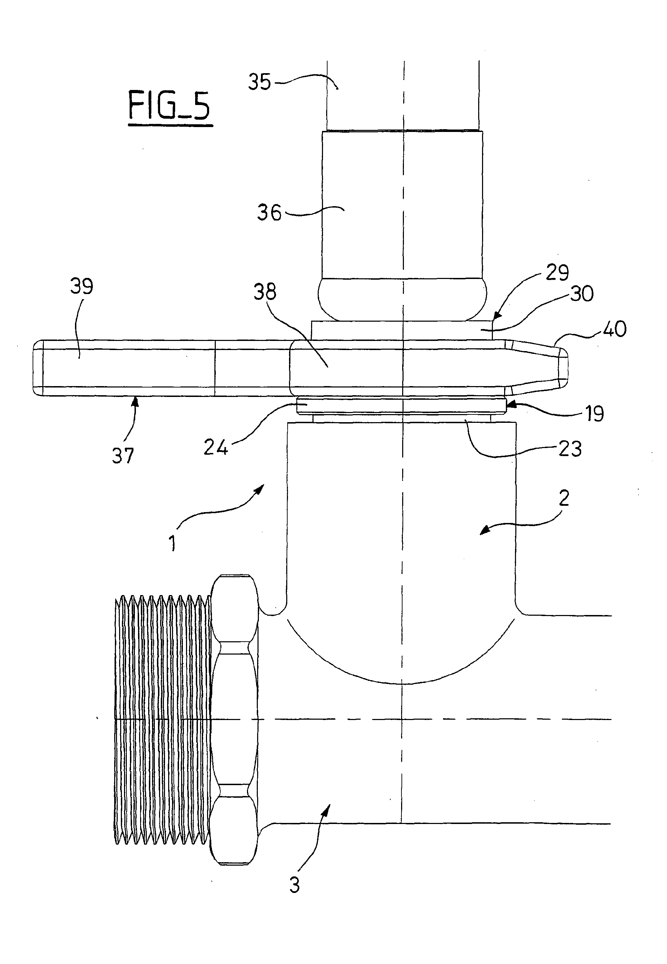

A partir de la position accouplée représentée sur la figure 2, tenant l'outil 37 par son manche 39, on introduit, comme le montrent les figures 3 et 5, ses branches 38 entre l'extrémité extérieure de la bague de déverrouillage 19 et l'épaulement annulaire 30 de l'embout mâle 29, de part et d'autre la partie avant 31 et ce dernier. Ce faisant, les rampes 40 font glisser la bague de déverrouillage 19 dans le sens de son enfoncement.

Les rampes 40 sont réalisées de telle sorte que la bague de déverrouillage 19 provoque, dans une première phase, l'extraction des extrémités des dents 17 de la rondelle de retenue 15 à l'extérieur de la rainure annulaire 32 de l'embout mâle 29, comme décrit précédemment, et, dans une seconde phase, un court déplacement de l'embout mâle 29 par rapport à l'embout femelle 2 pour placer les dents 17 de la rondelle de retenue 15 en vis-à-vis de la paroi extérieure de la partie avant 31 de l'embout mâle 29, comme décrit précédemment.

On peut alors retirer l'outil 37 et poursuivre l'extraction de l'embout mâle comme décrit précédemment.

Si l'on souhaite relier des tuyaux 35 de diamètres différents à l'embout femelle 2, il suffit de disposer d'embouts mâles 29 dont seuls les diamètres de leurs parties arrière 33 sont différents et adaptés à ces tuyaux.

La présente invention ne se limite pas à l'exemple ci-dessus décrit. Bien des variantes de réalisation sont possibles sans sortir du cadre défini par les revendications annexées.

## Revendications

1. Raccord de tuyauterie, **caractérisé par le fait qu'**il comprend un embout femelle (2) et un embout mâle (29) comprenant une première partie d'extrémité (33) adaptée pour la fixation de l'extrémité d'un tuyau (35) et une seconde partie d'extrémité (31) adaptée pour être engagée dans l'embout femelle (2) et présentant une rainure annulaire extérieure de retenue (32),
que l'embout femelle est muni intérieurement d'une rondelle de retenue (15) au travers de laquelle s'engage l'embout mâle et comprenant une partie périphérique (16) reliée cet embout femelle et des dents intérieures (17) élastiquement déformables, inclinées vers le centre dans le sens dudit engagement et dont les extrémités s'engagent dans ladite rainure annulaire de retenue lorsque l'embout mâle et l'embout femelle sont amenés l'un dans l'autre dans une position montée,
et que l'embout femelle est muni d'une bague de déverrouillage coulissante (19) au travers de laquelle s'engage l'embout mâle et qui, lorsqu'elle est sollicitée dans ledit sens d'engagement, agit sur les dents de la rondelle de retenue pour provoquer leur extraction de la rainure périphérique de retenue de l'embout mâle.

2. Raccord selon la revendication 1, **caractérisé par le fait que** l'embout femelle est muni intérieurement d'un joint d'étanchéité (14) qui vient en appui contre une face périphérique de l'embout mâle située entre ladite rainure périphérique de retenue et l'extrémité de l'embout mâle.

3. Raccord selon l'une des revendications 1 et 2, **caractérisé par le fait que** l'embout mâle présente un épaulement annulaire périphérique (30) situé à distance de la bague de déverrouillage lorsque l'embout mâle et l'embout femelle sont en position montée, de telle sorte que l'engagement d'un outil de démontage (37) dans l'espace séparant la bague de déverrouillage et l'épaulement annulaire de l'embout mâle assure l'extraction précitée des dents de la rondelle de retenue.

4. Raccord selon la revendication 3, **caractérisé par le fait que** ledit outil de démontage comprend deux branches (38) s'engageant de part et d'autre de l'embout mâle (31), ces branches présentant des rampes (40) de façon à faire coulisser l'embout mâle et la bague de déverrouillage l'une par rapport à l'autre.

5. Raccord selon l'une quelconque des revendications précédentes, **caractérisé par le fait que** l'angle au sommet des dents inclinées (17) de ladite rondelle de retenue (15) est tel qu'elles peuvent glisser en appui contre la paroi extérieure (31) de la seconde partie (31) de l'embout mâle.

6. Raccord selon l'une quelconque des revendications précédentes, **caractérisé par le fait que** l'embout femelle est muni intérieurement d'un anneau de maintien (18) et que la partie périphérique (16) de la rondelle de retenue (15) est prise entre un épaulement intérieur d'appui (9) ménagé dans l'embout femelle (2) et cet anneau de maintien.

7. Raccord selon l'une quelconque des revendications précédentes, **caractérisé par le fait que** la rondelle de retenue s'engage librement dans l'embout femelle jusqu'à l'épaulement intérieur d'appui (9) de ce dernier.

8. Raccord selon l'une quelconque des revendications précédentes, **caractérisé par le fait que** l'embout femelle présente un épaulement annulaire intérieur (4) constituant une butée pour l'extrémité de la seconde partie (31) de l'embout mâle (29) lorsque ce dernier est en position montée.

9. Raccord selon l'une quelconque des revendications précédentes, **caractérisé par le fait que** l'embout femelle et la bague de déverrouillage présentent respectivement un épaulement annulaire (22) et une rainure annulaire (12) engagés l'un dans l'autre.

10. Raccord selon l'une quelconque des revendications, **caractérisé par le fait que** la bague de déverrouillage présente des fentes longitudinales de montage (29).

11. Raccord selon l'une quelconque des revendications, **caractérisé par le fait que** l'embout mâle (29) présente une rainure annulaire extérieure (41), qui, en position montée, est localisée dans la zone de la partie arrière de la bague de déverrouillage 19.
